Europäisches Patentamt

European Patent Office

Office européen des brevets

(19)

(11) Publication number: **0 072 147**
**A1**

## EUROPEAN PATENT APPLICATION

(12)

(21) Application number: **82303987.0**

(22) Date of filing: **28.07.82**

(51) Int. Cl.³: **A 01 K 63/00**

(30) Priority: **04.08.81 US 289865**

(43) Date of publication of application: **16.02.83**
**Bulletin 83/7**

(84) Designated Contracting States: **AT BE CH DE FR GB IT LI NL SE**

(71) Applicant: **AQUARIUM PHARMACEUTICALS INC., 15 North 7th Street, Perkasie Pennsylvania 18944 (US)**

(72) Inventor: **Goldstein, Joel, 3313 Stout Road, Ambler Pennsylvania 19002 (US)**
Inventor: **Abrevaya, Albert, 55 Callowhill Road, Chalfont Pennsylvania 19914 (US)**

(74) Representative: **Oliver, Roy Edward et al, POLLAK,MERCER & TENCH High Holborn House 52-54 High Holborn, London WC1V 6RY (GB)**

(54) **Fresh water fish environment.**

(57) Fresh water fish are packed in closed containers for shipment containing tris buffers and zeolite with the pH maintained between about 7.8 and about 8.2.

EP 0 072 147 A1

-1-

## FRESH WATER FISH ENVIRONMENT

### Background of the Invention

The present invention relates to a method for maintaining fresh water fish in an environment which provides an excellent survival rate for more fish. More particularly, this invention concerns shipment of fresh water fish in closed containers.

The main problem in maintaining fresh water fish during transportation is the deleterious effects of fish waste products, namely, carbon dioxide and ammonia. Both carbon dioxide and ammonia are fish respiratory excretions. Ammonia is also excreted through the skin of fish. It is essential that carbon dioxide and ammonia are controlled to avoid their reaching toxic levels. It has been determined that fish die during shipment because of a build-up of carbon dioxide and ammonia, rather than a lack of oxygen.

Besides being a waste product of fish, ammonia is released into aquatic systems by dead fish, foreign matter and uneaten fish food. Ammonia is generally released as a gas and converted to $NH_4^+$ by the following reaction:

$$NH_3(g) + H_2O(l) = NH_4^+ + OH^-$$

Ammonia is extremely toxic to fresh water fish species. At sublethal levels, ammonia is capable of inhibiting growth and can produce an increased susceptibility to other unfavorable conditions. The rate at which ammonia reaches toxic concentrations is a direct function of population density, the pH of the water, as well as excess feeding.

Nitrification by microbiological filtration is the primary means of ammonia removal in open fish systems, such as aquaria. In nitrification, ammonia is oxidized to nitrate in two steps.

It has been shown that zeolites are effective in reducing ammonia concentrations in aquatic systems. See Gratzek, J.B. and Hayter, C., "An Experiment In Filtration For The Freshwater Aquarium", PETS/SUPPLIES/MARKETING, June, 1979 and Johnson, P.W. and Sieburth, J. McN, "Ammonia Removal By Selective Ion Exchange, A Backup System For Microbiological Filters In Closed-System Aquaculture", AQUACULTURE, 4, 61-68, 1974.

Most fresh water fish from the United States are from waters having at a maximum pH of 7.4. Exotic fish, for example from South America, are from environments at a pH of about 6.5. If fish shipped at these pH levels, carbon dioxide is a major problem. Buffers, such as tris buffers, are used to impart a sufficiently high pH above pH 7.5 where they are effective in removing excessive carbon dioxide. However, at these higher pH levels the ammonia concentration drastically increases to toxic levels.

## Summary Of The Invention

There has now been discovered a method for maintaining fresh water fish in water which comprises maintaining the pH of the water at between about 7.8 and about 8.2 by adding to the water a sufficient amount of buffer to tie up carbon dioxide in the water below toxic limits for fish and adding to the water a sufficient amount of zeolite to maintain ammonia levels below toxic limits for fish. The zeolite is alkaline, non-toxic and substantially non-clay containing.

## Detailed Description Of The Invention

Fresh water fish are generally shipped in a six liter heavy plastic bag. The bag containing water and fish is placed within a polystyrene foam container which is inside a cardboard carton. Before the bag is sealed, it is topped off with pure oxygen in an amount in excess of what the fish may be expected to consume during transportation in anticipation of any unexpected delays. Different species of fish are packed in different concentrations. Typical packing concentrations are as follows:

Comet Goldfish (2 inches):    200

Swordtail (2 inches):    300

Opaline Gourami (2 inches):    200

Shipping times generally vary from between about 8 and about 48 hours. In a moderate pack of fish, carbon dioxide and ammonia waste products build-up in about 4 hours. This is apparent by noticing the gill pumping and erratic movement of the fish.

In the present invention, the pH of the water is maintained at between about 7.8 and about 8.2 and preferably between about 7.8 and about 8.0. If the novel composition of the present invention were not added to the water, the fish would likely die or suffer pH shock and be adversed affected, since the fish must normally be maintained at the pH of their natural environment or be very slowly acclimated to a different pH.

In order to insure that the water has a sufficiently high pH to avoid toxic levels of carbon dioxide which builds up and may kill the fish, buffers are utilized. A buffer is a solution containing both a weak acid and its conjugate weak base whose pH changes only slightly on the addition of acid or alkali. The weak acid becomes a buffer when alkali is added, and the weak base becomes a buffer on addition of acid.

It is preferred to use tris buffers. A preferred tris buffer is tris(hydroxymethyl)aminomethane. Also preferred is a mixture of tris(hydroxymethyl)aminomethane and tris(hydroxymethyl)aminomethane hydrochloride.

The buffer could also be mixed with additives such as antibacterial compounds, for example, "FURAN-2", an antibacterial composition of Aquarium Pharmaceuticals, Inc., Perkasie, Pennsylvania, having the primary active ingredients nitrofurazone and furazolidone.

Enough buffer must be utilized in order to control the pH at a sufficient level to "tie up" carbon dioxide. The mechanism by which buffers, and more particularly the tris buffers, tie up, that is, render carbon dioxide nontoxic, is presently unknown. Although the mechanism is unknown, it has been observed that more carbon dioxide is tied up as pH increases. Although the tris buffers have very little, if any, effect on carbon dioxide at a pH of about 7.4 or less, they are preferred for use in the present invention because they are very effective in tying up carbon dioxide at higher pH levels. Excess buffer can be used without any undue effects. Preferably, an excess amount of buffer is used to try to anticipate unexpected delays or other problems in shipping.

In using buffers, such as tris buffers, however, the pH is elevated to the point where ammonia would kill the fish if the ammonia were not removed. In a typical moderately packed shipping container, the ammonia level may be about 15 ppm. This low concentration of ammonia is not very toxic at a pH of 6.5. However, at a higher pH, the same concentration of ammonia is very toxic. This is demonstrated by the following table:

## Table 1

Percentage of Un-ionized Ammonia in Aqueous Ammonia
Solutions at Different pH Values at 25°C (77°F)

| pH | $NH_3(g)$ Concentration (%) |
|---|---|
| 6.5 | 0.18 |
| 6.6 | 0.22 |
| 6.7 | 0.28 |
| 6.8 | 0.35 |
| 6.9 | 0.44 |
| 7.0 | 0.55 |
| 7.1 | 0.70 |
| 7.2 | 0.88 |
| 7.3 | 1.10 |
| 7.4 | 1.38 |
| 7.5 | 1.73 |
| 7.6 | 2.17 |
| 7.7 | 2.72 |
| 7.8 | 3.39 |
| 7.9 | 4.24 |
| 8.0 | 5.28 |
| 8.1 | 6.55 |
| 8.2 | 8.11 |
| 8.3 | 10.00 |
| 8.4 | 12.27 |
| 8.5 | 14.97 |
| 8.6 | 18.14 |
| 8.7 | 21.82 |
| 8.8 | 26.00 |
| 8.9 | 30.66 |
| 9.0 | 35.76 |

Reference: Spotte, S., MARINE AQUARIUM KEEPING, John
Wiley & Sons, N.Y., 1973 (pp. 52-53).

Referring to Table 1, at a pH of 6.5, the gaseous ammonia concentration in water is 0.18%. However, at a pH of 8.3, the ammonia concentration is a lethal 10%. The ammonia concentrations are even greater for water at a higher temperature.

The other essential ingredient in the novel composition of the present invention, besides buffer, is a zeolite. The function of the zeolite in this invention is to remove the excessive concentration of ammonia caused by elevated pH as the direct result of controlling carbon dioxide build-up by the introduction of buffers. The tris buffers actually release $NH_4^+$ as part of the reaction in which carbon dioxide is tied up. This increases the concentration of toxic ammonia which must be removed. The zeolite must be non-toxic and alkaline. Zeolites utilized in this invention should not disassociate in water to form particles, e.g., clay particles, which can disassociate in water and interfere with the fish's breathing. Zeolites with this property shall be referred to hereinafter as "substantially non-clay containing" zeolites.

The zeolite is added in an amount sufficient to reduce the ammonia concentration to a level below the toxic limits for the fish. It is preferred to use an excess amount of zeolite. In a six liter container, approximately 100 grams of zeolite would be a sufficient excess to maintain ammonia generated during shipping, including unscheduled delays, below toxic levels for more than double the present population density of fish being shipped.

Zeolites, whether they be natural or synthetic, are characterized by an aluminosilicate tetrahedral framework, and have ion exchangeable large cations and loosely held water molecules permitting reversible dehydration. The general formula for a zeolite is as follows: $MO \cdot Al_2O_3 \cdot nSiO_2 \cdot xH_2O$, where M is Na, K, Ca, Sr or Ba and n and x are integers.

Since the oxygen atoms in the framework of the zeolite are each shared by two tetrahedrons, the (Si, Al): O ratio is exactly 1:2. The amount of large cations present is dependent on the aluminum to silicon ratio and the formal charge of these large cations. The large cations, which are coordinated by framework oxygens and water molecules, reside in large cavities in the crystal structure. These cavities and channels may even permit the selective passage of organic molecules. Thus, zeolites may function by two mechanisms in this invention. One mechanism may be as a "molecular sieve" and the other may be as an adsorbent, although the inventor does not wish to be bound by any particular theory.

Zeolites are low-temperature and low-pressure minerals and commonly occur as late minerals in amygdaliodal basalts, as devitrification products, as authigenic minerals in sandstones and other sediments, and as alteration products of feldspars and nepheline. Phillipsite and laumontite occur extensively in sediments on the ocean floor. Stilbite, heulandite, analcime, chabazite, and scolecite are common as large crystals in vesicles and cavitites in the basalts of the Minas Basin Region, Nova Scotia; West Paterson, N.J.; the Columbia River Plateau; Berufjord, Iceland; Poona, India; and many other localities. An exemplary listing of natural zeolites is given below in Table 2.

Table 2

| Group | Name | Formula |
|---|---|---|
| Analcime | Analcime | $Na(AlSi_2O_6) \cdot H_2O$ |
| | Wairakite | $Ca(AlSi_2O_6) \cdot H_2O$ |
| | Pollucite | $Cs(AlSi_2O_6) \cdot xH_2O$ |
| Sodalite | Sodalite | $Na_4(Al_3Si_3O_{12})Cl$ |
| | Faujasite | $(Na_2,Ca)_{30}((Al,Si)_{192}O_{384}) \cdot 260H_2O$ |
| Chabazite | Chabazite | $Ca_2(Al_4Si_8O_{24}) \cdot 13H_2O$ |
| | Gmelinite | $Na_2(Al_2Si_4O_{12}) \cdot 6H_2O$ |
| | Erionite, Offretite | $Ca_{4,5}(Al_9Si_{27}O_{72}) \cdot 27H_2O$ |

| | Levynite | $Ca(Al_2Si_4O_{12}) \cdot 6H_2O$ |
|---|---|---|
| Natrolite | Natrolite | $Na_2(Al_2Si_3O_{10}) \cdot 2H_2O$ |
| | Scolecite | $Ca(Al_2Si_3O_{10}) \cdot 3H_2O$ |
| | Mesolite | $Na_2Ca_2(Al_2Si_3O_{10}) \cdot 8H_2O$ |
| | Edingtonite | $Ba(Al_2Si_3O_{10}) \cdot 3H_2O$ |
| | Thomsonite | $NaCa_2(Al_5Si_5O_{20}) \cdot 6H_2O$ |
| | Gonnardite | $(Ca,Na)_{6-8}((Si,Al)_{20}O_{40}) \cdot 12H_2O$ |
| Phillipsite | Phillipsite | $(K,Na)_5(Al_5Si_{11}O_{32}) \cdot 10H_2O$ |
| | Harmontome | $Ba_2(Al_4Si_{12}O_{32}) \cdot 12H_2O$ |
| | Gismondine | $Ca(Al_2Si_2O_8) \cdot 4H_2O$ |
| | Garronite | $NaCa_{2,5}(Al_6Si_{10}O_{32}) \cdot 13H_2O$ |
| Mordenite | Mordenite | $Na(AlSi_5O_{12}) \cdot 3H_2O$ |
| | Diachiardite | $(Na_2,Ca)_2(Al_4Si_{20}O_{48}) \cdot 12H_2O$ |
| Other | Heulandite | $Ca(Al_2Si_7O_{18}) \cdot 6H_2O$ |
| | Brewsterite | $Sr(Al_2Si_6O_{16}) \cdot 5H_2O$ |
| | Epistilbite | $Ca(Al_2Si_6O_{16}) \cdot H_2O$ |
| | Stilbite | $Na_2Ca_4(Al_{10}Si_{26}O_{72}) \cdot 28H_2O$ |
| | Yugawaralite | $Ca_4(Al_7Si_{20}O_{54}) \cdot 14H_2O$ |
| | Laumontite | $Ca(Al_2Si_4O_{12}) \cdot 4H_2O$ |
| | Ferrierite | $Na_4Mg_2(OH)_2(Al_6Si_{30}O_{72}) \cdot 18H_2O$ |
| | Paulingite | $(K,Ca)_{120}((Al,Si)_{580}O_{1160}) \cdot 690H_2O$ |

Prior art techniques have resulted in the formation of a great variety of synthetic aluminosilicate zeolites. These zeolites have come to be desiganted by letter or other convenient symbols, as illustrated by zeolite A (U.S. Pat No. 2,882,243), zeolite X (U.S. Pat No. 2,882,244), zeolite Y (U.S. Pat No. 3,130,007), zeolite ZK-5 (U.S. Pat No. 3, 247,195), zeolite ZK-4 (U.S. Pat No. 3,314,752), zeolite ZSM-5 (U.S. Pat No. 3,702,886), zeolite ZSM-11 (U.S. Pat No. 3,709,979), zeolite ZSM-12 (U.S. Pat. No. 3,832,449), zeolite ZSM-20 (U.S. Pat. No. 3,972,983), ZSM-23 (U.S. Pat. No. 4,075,842), ZSM-35 (U.S. Pat. No. 4,016,245), ZSM-38 (U.S. Pat. No. 4,046,859), merely to name a few.

The preferred zeolites for use in the present invention are those which selectively or preferentially adsorb or otherwise remove ammonia. The natural zeolites chabazite and clinoptilolite have been shown to be effective in this invention and are presently the most preferred zeolite. Clinoptilolite has the formula $(Ca,Na_2,K_2)O \cdot Al_2O_3 \cdot 10SiO_2 \cdot 7H_2O$ and is a dimorphorous form of ptilolite.

Experiments were conducted using samples from a batch of Tris buffer mixture according to the following formulation:

|  | Kilograms | Wt. % |
|---|---|---|
| Sigma Tris HCl | 2.5 | 18.6 |
| Sigma Tris | 7.5 | 55.8 |
| Dendritic Salt ("MORTON", non-hygroscopic) | 3.3 | 24.6 |
| "FURAN 2" Powder (antibacterial compound) | 0.13 | 1.0 |
| Totals | 13.43 | 100.0 |

A typical batch of "FURAN-2" has the following composition:

| Material | Kilograms | Wt. % |
|---|---|---|
| Nitrofurazone | 15.00 | 9.3 |
| Furazolidone | 6.25 | 3.9 |
| Methylene Blue | 0.50 | 0.3 |
| Sodium Lauryl Sulfate | 1.25 | 0.8 |
| PEG 4000 | 2.50 | 1.5 |
| Dendritic Salt | 136.50 | 84.2 |
| Totals | 162.00 | 100.0 |

The use of dendritic salt and the antibacterial compound in this invention are optional. The salt serves solely as an inert filler to provide a convenient measure of the composition for a standard six liter pack.

As pointed out above, an excess of each of the buffer and zeolite is preferably used in an effort to make certain that the carbon dioxide and ammonia in a shiment of fish is kept below toxic levels during shipping where there may be unanticipated delays. It is only necessary to use enough of the buffer and zeolite together to keep the carbon dioxide and ammonia below toxic limits. These minimum amounts are a function of the size of the container, the amount of water, the temperature of the water, the number of fish, the shipping time and the species of fish. The appropriate minimum amount can be determined by experienced shippers and fish farmers without undue experimentation. A buffer: zeolite weight ratio of about 7:100 has been found to be effective.

Two teaspoons (about 7 grams) of the above-described Tris buffer mixture were added with one-half cup (about 100 grams) of chabazite or clinoptilolite zeolite to a six liter container of water. The results of shipping fish in a six liter pack containing this composition are given in Table 3 below.

### Table 3
#### Packing Concentration of Fish in Six Liters of Water

| Species Of Fish | Conventional Packing Concentration (# fish) | Packing Concentration Using Method Of Invention (# fish) |
| --- | --- | --- |
| Comet Goldfish | approx. 200 | approx. 450-500 |
| Opaline Gourami | approx. 200 | approx. 400 |
| Swordtail | approx. 300 | approx. 600 |

500 Comet goldfish packed in accordance with the present invention in 6 liters of water have been shipped over a period of 26 hours. Survival rate has been about 98%. There also appears to be a qualitative difference after shipment in the fish. 500 Comet goldfish after 14 hours of shipment did not engage in surface breathing or gill pumping when dumped into a large tank after the shipment arrived. Normally, when the Comet goldfish were packed 200 to a shipment package without adding the composition of the present invention, they swam and breathed near the surface of the large tank to which they were transferred after shipment and experienced significant gill pumping.

By using the present invention, at least twice the number of fish were able to be packed and shipped with an excellent survival rate, compared to the number packed and shipped without the composition of the present invention. By maintaining a high pH, the carbon dioxide removal properties of the buffer are enhanced, and with the use of the zeolite, the fish surprisingly do not suffer from pH shock as would be expected when they are transferred from their natural environment of relatively low pH to the high pH of the shipping container.

Although the inventor does not wish to be bound by any particular theory as to how the composition of the present invention allows for the increased population density of packing fish for shipment and the lessening or elimination of stress to the fish, one explanation may be that the fish make better use of the available oxygen present in and above the water. The inventors believe that the composition of the present invention ties up or removes from the water carbon dioxide and ammonia which may compete with oxygen for available respiratory sites in the fish's gills. Thus, the fish which have been shipped in water containing the composition of the present invention do not exhibit the stressful symptoms which are present in fish shipped in water not containing the composition of the present invention.

The present invention may be embodied in other specific forms without departing from the spirit or essential attributes thereof and, accordingly, reference should be made to the appended claims, rather than to the foregoing specification, as indicating the scope of the invention.

0072147

CLAIMS

1. A method of maintaining fresh water fish in water including maintaining the pH of the water at between about 7.8 and about 8.2 characterized by adding to the water a sufficient amount of buffer to tie up carbon dioxide in the water below toxic limits for fish and adding to the water a sufficient amount of zeolite to maintain ammonia levels in the water below toxic limits for fish, said zeolite being alkaline, non-toxic and substantially nonclay containing.

2. The method of claim 1 wherein said pH is between about 7.8 and about 8.0.

3. The method of claim 1 wherein said zeolite is selected from the group consisting of chabazite and clinoptilolite.

4. The method of claim 1 wherein said buffer is tris buffer.

5. The method of claim 4 wherein said tris buffer is selected from the group consisting of tris(hydroxymethyl) aminomethane hydrochloride, and tris(hydroxymethyl)aminomethane and mixtures thereof.

6. The method of claim 4 wherein said tris buffer is in a concentration of at least 7 grams buffer per six liters water.

7. The method of claim 1 wherein said zeolite is in the concentration of at least about 100 grams zeolite per six liters water.

8. The method of claim 1 wherein excess buffer and zeolite are added to said water.

9. A composition for a fresh water fish environment for maintaining the pH at between about 7.8 and about 8.2 of water to which the composition is adapted to be added characterized by a sufficient amount of buffer to tie up carbon dioxide to be formed in the water below toxic limits for fish and a sufficient amount of zeolite to remove ammonia to be formed in the water below toxic limits for fish.

10.  The composition of claim 9 wherein said pH is maintained at between about 7.8 and about 8.0.

11.  The composition of claim 9 wherein said zeolite is selected from the group consisting of chabazite and clinoptilolite.

12.  The compositon of claim 9 wherein said buffer is tris buffer.

13.  The composition of claim 12 wherein said tris buffer is selected from the group consisting of tris(hydroxymethyl)aminomethane hydrochloride, tris(hydroxymethyl)-aminomethane and mixtures thereof.

14.  The composition of claim 9 in which the buffer: zeolite weight ratio is about 7:100.

European Patent
Office

**EUROPEAN SEARCH REPORT**

0072147
Application number

EP 82 30 3987

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| | --- | | A 01 K  63/00 |
| X | US-A-2 783 736  (G.N. WASHBURN)  * Whole document * | 1-3,7-11,14 | |
| | --- | | |
| A | FR-A-2 354 048  (ASAHI et al.)  * Pages 32-34 * | 1 | |
| | --- | | |
| A | BE-A- 878 008  (R. DENIS et al.)  * Claims 1-8 * | 1 | |
| | --- | | |
| A | JOURNAL OF PHARMACEUTICAL SCIENCES, vol. 56, no. 2, February 1967, pages 282-284, Washington, USA N. CHEN et al.: "Evaluation of antacid activity for metal complexes of tris(hydroxymethyl)aminomethane (THAM)" * Pages 282-284 * | 3,4 | TECHNICAL FIELDS SEARCHED (Int. Cl. ³)  A 01 K |
| | ----- | | |

The present search report has been drawn up for all claims

| Place of search | Date of completion of the search | Examiner |
|---|---|---|
| THE HAGUE | 05-11-1982 | VAN AKOLEYEN H.T.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82